# EUROPEAN PATENT APPLICATION

(11) **EP 3 936 492 A1**
(43) Date of publication of application: **12.01.2022**
(21) Application number: 20184603.7
(22) Date of filing: 07.07.2020
(51) Int. Cl.: C04B 38/10, C04B 40/00, C09K 8/584, C09K 8/594, C09K 8/70, C09K 8/94

(54) **FOAMING COMPOSITION COMPRISING ALKYL LACTIC ESTERS AS FOAM-BOOSTING AGENTS AND USE OF THE ALKYL LACTIC ESTERS**

(71) Applicant: Sasol Chemicals GmbH, 20537 Hamburg (DE)
(72) Inventor: Giordano, Sebastiano Giovanni, 26841 Casalpusterlengo Lodi (IT)
(74) Representative: Müller Schupfner & Partner Patent- und Rechtsanwaltspartnerschaft mbB

(57) **Abstract**

The present invention is concerned with a foaming composition comprising alkyl lactic esters, water and at least one anionic surfactant. More specifically, it relates to alkyl lactic esters as superior foam-boosting agents in surfactant compositions. The invention further provides a method of preparing the foaming compositions and the use of alkyl lactic esters in surfactant compositions in order to enhance foaming properties, for application in for example the oil and gas recovery industry.

## Description

### FIELD OF THE INVENTION

The present invention relates to a foaming composition comprising alkyl lactic esters, water and at least one anionic surfactant. More specifically, it relates to alkyl lactic esters as superior foam-boosting agents in surfactant compositions. The invention further provides a method of preparing the foaming compositions and the use of alkyl lactic esters in surfactant compositions in order to enhance foaming properties, for application in for example the oil and gas recovery industry.

### BACKGROUND OF THE INVENTION AND DISCUSSION OF THE PRIOR ART

Crude oil and gas recovery from subterranean reservoirs, water-lifting from boreholes and gas-deliquefying applications require careful selection of appropriate means to effectively achieve and enhance recovery in a cost effective and environmentally acceptable way.

Aqueous foams have repeatedly been proven to play an important role in such recovery processes, specifically to increase volumetric sweep efficiency through the oil-bearing rock. Sweep inefficiencies often arise as a result of reservoir heterogeneity, gravity segregation and viscous fingering. Surfactants have repeatedly been proposed as an additive to water in order to generate foam, as described for example in EP2838970 B1. Other references such as US4088190 and US5074358 describe foaming agents such as alkyl sulfoacetates and fluorocarbon surfactants, admixed with amphoteric or anionic surfactants. Many surfactants however, display numerous disadvantages such as adsorption on carbonate and sandstone rocks, as well as drawbacks such as instability of foam in brine solutions and at high reservoir temperatures.

US4791097 describes a method for modifying and enhancing foam in an aqueous surfactant composition, wherein benzoic acid esters are added to an aqueous surfactant mixture, to be used as emollient carriers in cosmetic compositions in hair and skin care products. No reference is however made relating to their suitability for alternative industry application areas.

### OBJECT OF THE INVENTION

There is, therefore, an ongoing need for the development of new foam-generating compositions that overcome the above-mentioned problems, showing good tolerance regardless of the harsh conditions present in subterranean wells, thereby enhancing stable foam formation and aiding in the effective recovery of high value products.

### SUMMARY OF THE INVENTION

In the following, a foaming composition comprising alkyl lactic esters is described that may be utilized in various recovery processes in the oil and gas industry. These compositions have been found to display sought after foaming behaviour, specifically relating to obtaining high initial foaming behaviour, with sustained foaming observed over a prolonged time period. The application processes may comprise the recovery of water, gas and oil, to include tertiary recovery operations such as chemicals and gas injections in subterranean reservoirs for enhanced oil recovery (EOR), as well as drilling applications in oil and gas fields.

The foaming composition (or in short "the composition") according to the invention comprises:
at least one anionic surfactant;
water; and
an alkyl lactic ester or mixture of alkyl lactic esters;
wherein the alkyl lactic ester has a molecular structure as shown in structure I: 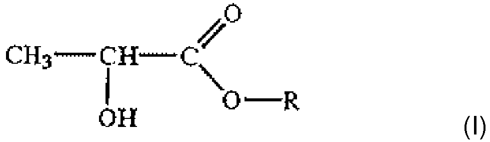 wherein
- R: is a linear alkyl group having from 12, 13 or 14 carbon atoms, preferably 12 or 13 carbon atoms, or
a branched alkyl group having from 12, 13 or 14 carbon atoms, preferably 12 or 13 carbon atoms, or
a mixture thereof (including mixtures of the different chain lengths of the alkyl group);

R is preferably a branched alkyl group having from 12, 13 or 14 carbon atoms or a mixture of branched and linear alkyl group having from 12, 13 or 14 carbon atoms, for example with more than 30% or the alkyl groups being branched.

In the case of the branched alkyl group R, the branching can be internal branching from carbon-3 position onwards to the omega - 1 carbon position (second last carbon), or more preferably, mono-branching at least at the carbon-2 position, most preferably mono-branching only at the carbon-2 position.

The anionic surfactant or mixture of surfactants may include alcohol sulfates (e.g. oxo C₁₂₋₁₃ alcohol sulphate sodium salts), alcohol ether sulphates (e.g. C₆₋₁₀ linear alcohol ether sulphate triethanolamine salts), alcohol ether sulfonates, alcohol ether carboxylates (e.g. C₈ linear alcohol ether carboxylate sodium salts), alkyl benzene sulfonic acids (e.g. C₁₀₋₁₃ linear alkylbenzene sulfonic acid sodium salts) or olefin sulfonates (e.g. alpha C₁₄ to C₁₆ olefin sulfonate sodium salt), where in each case the alcohol group preferably has from 6 to 16 carbon atoms.

The anionic surfactant or surfactants preferably include surfactants or mixture of surfactants with a molecular structure as shown in structure II:

R₁ - O - (EO)ₘ - SO₃⁻ - X⁺ (II)

wherein
- R₁: is a linear or branched C₆ to C₃₂ alkyl group, preferably a linear or branched C₆ to C₁₀ alkyl group;
- EO: is an ethoxy group;
- m: is 1 to 12;
- X⁺: is selected from the group comprising ammonium ions (NH₄⁺), ions of mono-, di- or tri- C₁ to C₃ alkanolamines, to include monoethanolamine, diethanolamine, triethanolamine, as well as ions of isopropanolamines, to include monoisopropanolamine, diisopropanolamine and triisopropanolamine, and the alkali metal ions Li⁺, Na⁺ or K⁺ or mixtures thereof.

X⁺ is preferably selected from the ethanolamines; X⁺ is most preferably monoethanolamine. R₁ is preferably a linear alkyl group with 6 to 10 carbon atoms. m is preferably 1 to 6, more preferably 2 to 4; X⁺ is preferably triethanolamine or monoethanolamine, more preferably monoethanolamine.

It is to be understood that the alkoxylation grade m is an average value. One example for an alcohol ether sulphate is C₆₋₁₀ linear alcohol ether (EO) sulphate triethanolamine salt.

The composition may further comprise other surfactants, such as non-ionic surfactants and amphotheric surfactants, solvents and water.

Non-ionic surfactants may include alkoxylated alcohols.

Preferably, the non-ionic surfactant is an alcohol alkoxylate with a molecular structure as shown in structure III:

R₂-O-(AO)_{a+b}-H (III)

wherein
- R₂: is a linear or branched alkyl group, or a mixture of linear and branched alkyl groups, having from 6 to 14 carbon atoms;
- AO: is an ethoxy group (EO) and / or a propoxy group (PO), wherein a, assigned to AO = EO, and b, assigned to AO = PO, may be the same or different,
wherein the EO and PO may for example
- be randomly distributed or
- be one or more blocks of multiple EO bound to one or more blocks of multiple PO;
- a: = 0 to 20;
- b: = 0 to 20;
- a + b: ≥ 1 (at least 1).

More preferably, R₂ is a linear C₈ to C₁₄ alkyl group, most preferably a linear C₈ alkyl group; AO is an ethoxy group (EO), with a = 6 to 9 and b = 0.

As previously stated, it is to be understood that alkoxylation grade, the values of a and b, is an average value.

Amphotheric surfactants may include cocamido propyl betaine or lauramido propyl betaine.

Solvents may include glycols, such as ethylene glycols or polyethylene glycols and diols such PEG 4000g/mol or 1,2 propanediol. Preferably, the solvent is 1,2 dipropyleneglycol and /or poly-ethyleneglycol.

The amount of the water in the composition is preferably in the range of 50 weight% to 99,8 weight% of water, most preferably 96.0 weight% to 99.0 weight%, relative to the weight of the composition.

The amount of the above described anionic surfactant in the composition is preferably in the range of 0.1 to 5.0 weight%, most preferably 0.7 to 1.4 weight%, relative to the weight of the composition.

The amount of the above described alkyl lactic ester in the composition is preferably in the range of 0.05 to 0.5 weight%, more preferably 0.1 to 0.2 weight% and most preferably 0.1 to 0.10 weight%, relative to the weight of the composition.

The amount of the above described non-ionic surfactant may be in the range of 0 to 5.0 weight%, more preferably 0.1 to 2.0 weight%, most preferably 0.1 to 0.5 weight%, relative to the weight of the composition.

The amount of the above described solvent may be in the range of 0 to 5.0 weight%, more preferably 0.1 to 1.5 weight%, most preferably 0.2 to 1.3 weight%, relative to the weight of the composition.

The water of the foaming composition may have a wide range of salinities, including de-mineralised water and sea water, with a salinity of above 0 to 5.0 weight%, more preferably 3 to 4 weight%. These salts can typically be alkaline and / or alkaline earth metal salts in solution.

The alkyl lactic esters preferably increase the foaming height (as described in the Experimental section) of the composition by at least 1 to 20% upon addition of the alkyl lactic esters, more preferably by at least 5 to 20%, most preferably by at least 10 to 20%, when compared to the foaming volume of a composition without the addition of the alkyl lactic esters.

The invention also describes a method for enhancing and stabilising foam formation in an aqueous surfactant composition comprising the addition of alkyl lactic esters as described above to an aqueous surfactant mixture.

Also claimed is the use of the alkyl lactic esters as defined above in a composition comprising at least anionic surfactants and water and preferably at least additional surfactants and solvents, the composition being utilized in the recovery of water, gas and oil, to include tertiary recovery operations such as chemicals and gas injections, as well as drilling applications.

The application areas of the inventive foaming compositions or alkyl lactic esters as additives for surfactant compositions are, however, not limited to oilfield applications and might include various additional technology areas such as gypsum board manufacturing, building industry, construction industry (cement foam application, aerated concrete) and personal care / cosmetic applications.

### EXPERIMENTAL SECTION

The chemical compounds described in Table 1 were employed to demonstrate the invention as described:

**TABLE 1:**

| **CHEMICALS** | **ORIGIN** |
|---|---|
| ***ANIONIC SURFACTANTS*** | |
| C6-C10 ethoxylated (3,5EO) sulfate monoethylamine (MEA) salt (linear alkyl chain) | Sasol - commercial product |

| ***NON-IONIC SURFACTANTS*** | |
|---|---|
| C8 ethoxylated (7EO) alcohol (linear alkyl chain) | Sasol - commercial product |

| ***ESTERS (Foam-boosting agent)*** | |
|---|---|
| C12-13 alkyl lactic ester (C2 mono-branched alkyl chain) | Sasol - commercial product |
| C11 ethoxylated (3EO) lactic ester (50:50 branched/linear alkyl chain) | Sasol - developmental product |
| C12-13 alkyl lactic ester (50:50 linear/branched (mostly not 2-position) alkyl chain) | Sasol - developmental product |
| C12-15 alkyl benzoic ester (75:25 linear/ branched alkyl chain) | Sasol commercial product |
| C11 ethoxylated (3EO) benzoic ester (50:50 branched/linear alkyl chain) | Sasol developmental product |

| ***SOLVENTS*** | |
|---|---|
| Polyethyleneglycol (PEG 4000, MW about 4000g/mol) | commercial product |
| 1,2 Dipropyleneglycol | commercial product |

The following non-limiting examples describe the preparation of the compounds and compositions useful for this invention, together with the foaming tests carried out and foaming properties displayed by the compositions.

### A. General procedure to prepare alkyl lactic esters and alkyl benzoic esters

Both the alkyl lactic esters and the alkyl benzoic esters were prepared according to the following general procedure:
A jacketed reactor vessel was equipped with mixing, bottom withdrawing and vacuum facilities, as well as a feedline for nitrogen gas. The stoichiometric amount of an appropriate alcohol was fed to the reactor, while moisture was continuously removed from the vessel by nitrogen purging. An amount of between 0.1 weight% to 0.5 weight% of methanesulfonic acid, together with the stoichiometric amount of either lactic or benzoic acid, were fed into the reactor.

The mixture was heated under vacuum (<100 mmHg) to a temperature higher than 105°C. The reaction was run for eight to nine hours, until an acid value of <1.5 mg KOH/g was reached. Hereafter, the reaction mixture was cooled to a temperature lower than 50°C. Five to ten weight% of water was mixed into to the mixture, in order to recover the methanesulfonic acid from the organic phase. The mixture was allowed to settle for thirty minutes to obtain the water and organic phases to separate.

The aqueous bottom phase was subsequently withdrawn from the reactor. The remaining organic phase (ester phase) was dried and neutralised by addition of Na₂CO₃ powder. The organic phase and Na₂CO₃ were mixed to form a slurry and stirred for approximately thirty minutes, followed by filtration using 5 micron filter paper. The ester product was sealed in a closed vessel for characterisation.

### B. Preparation of the foaming compositions

### B.1 Brine solution:

An amount of between 0 to 5.0 by weight of NaCl was measured into a volumetric vessel and dissolved to the required concentration with demineralised water. The solution was mixed for fifteen minutes to result in a clear and bright liquid.

### B.2 Surfactant solution:

The required compounds (anionic surfactant / non-ionic surfactant / solvent / alkyl lactic ester / alkyl benzoic ester / brine solution) were mixed together in a suitable container in amounts as required for the individual foam tests - see Tables 2 and 3. The compounds were mixed together for up to twenty minutes to form a homogeneous, clear and bright solution.

### C. General method to carry out the foam tests

The following method was employed to carry out foam tests with foaming compositions:
The foam height measurements were performed at room temperature (21°C) in a jacketed glass cylinder.

Equipment used for the foam tests:
- 2000 ml jacketed glass cylinder: diameter = 8cm, height = 50 cm
- 2000 ml metal beaker: diameter = 12.5 cm, height = 18 cm
- 3 blade propeller: blades positioned at 120°C orientation; length of blades = 50mm shape of blades = rectangular, pole-height = 200 mm, electric engine attached, ability to adjust the rotations from 500 rpm to 2000 rpm
- chronometer.

The international method UNI EN 13996 ("*Surface active agents* - *Foaming power and antifoaming power - Turbine stirring method*") was modified as described below:
i) The surfactant solution (foaming agent solution) was prepared in a 2 litre flask as described in B.2 above. 900 g of the foaming agent solution was transferred into the 2000 ml metal beaker.
ii) No foam should be generated when the foaming agent solution is poured into the metal beaker. If any foam is present, it should be collapsed. Only proceed with measurements when no foam is visible.
iii) The propeller was positioned at 5 mm from the bottom of the metal beaker.
iv) The electric engine was set at 1500 rpm by turning on the electric engine and mixing the foaming agent solution for 5 minutes.
v) The stirring was stopped after 5 minutes ±10 seconds.
vi) The solution and the foam was rapidly poured from the beaker into a graduated jacketed glass cylinder (capacity 2000 ml) with a tilt angle of 45° by allowing them to fall onto the volume indicator at the 1600 ml mark line and slide down the glass cylinder (in order not to have foam formation resulting from the transfer process).
vii) T₀ (Tzero) was when all the foam was completely poured from the beaker to the cylinder (i.e. when the foam-wire breaks). Thereafter, the glass cylinder was placed in a vertical position and the timer was restarted. The first foam value was recorded as well as the volume to the nearest 1 ml at the time zero, 1 minute, 2 minutes, 5 minutes (each to the nearest 5 seconds). This value indicated the level of the foam above the surfactant aqueous phase.
viii) The foam measurements were taken at Tzero (to demonstrate the foaming composition's foam ability) and at 5 minutes (T5) (to demonstrate the foaming composition's ability to support persistent foaming).

Table 2 summarises the performance of the various alkyl lactic esters used as foam-boosting agents in surfactant compositions, compared to CONTROL examples where no alkyl lactic ester was added. Table 3 compares the foam-boosting performance of alkyl lactic esters vs alkyl benzoic esters in various surfactant compositions.

It is clear from the foam height results, that the presence of the alkyl lactic esters in the surfactant compositions leads to higher starting foam heights, as well as higher sustained foaming heights after five minutes.

The foam results clearly demonstrate enhanced foaming results (i.e. higher starting foam heights, as well as higher sustained foaming heights after five minutes) when the alkyl lactic esters are present in the foaming composition, compared to the prior art's alkyl benzoic esters' performance.

**TABLE 2: Performance of ALKYL LACTIC ESTERS as foam-boosting agents in surfactant compositions (room temp [21 °C], salinity = 3.4 weight% NaCl)**

| **COMPONENT** (wt% of composition) | **B** (CONTROL) | **B1** (Invention) | **B3** (Invention) | **C** (CONTROL) | **C1** (Invention) |
|---|---|---|---|---|---|
| Anionic Surfactant | 0.7 | 0.7 | 0.7 | 1.4 | 1.4 |
| Non-ionic Surfactant | 0.5 | 0.5 | 0.5 | 0.5 | 0.5 |
| Solvent: PEG 4000 | - | - | - | - | - |
| Solvent: 1,2 dipropyleneglycol | 0.2 | 0.2 | 0.2 | 0.4 | 0.4 |
| C12-13 alkyl lactic ester (C2 mono-branched) | - | 0.1 | - | - | 0.1 |
| C12-13 alkyl lactic ester (50:50 linear/branched) | - | - | 0.1 | - | - |
| Water | 98.6 | 98.5 | 98.5 | 97.7 | 97.6 |

| **RESULTS** | | | | | |
|---|---|---|---|---|---|
| **cc foam@ 0 min /** | 770/ | 870/ | 780/ | 750/ | 870/ |
| **cc foam@ 5 min** | 470 | 510 | 480 | 450 | 540 |

| **Invention vs Control*** | | | | | |
|---|---|---|---|---|---|
| **% change@ 0 min /** | | +13.0/ | +1.3/ | | +16.0/ |
| **% change@ 5 min** | | +8.5 | +2.1 | | +20.0 |

| | | | | | |
|---|---|---|---|---|---|
| ** Positive % change values indicate enhanced foaming behavior of the invention compound versus the CONTROL sample* | | | | | |

**TABLE 3: Foaming performance of ALKYL LACTIC ESTERS vs ALKYL BENZOIC ESTERS in surfactant compositions (room temp [21 °C], salinity = 3.4 weight% NaCl)**

| **COMPONENT** (wt% of composition) | **A1*** | **A2*** | **A3*** | **A1.1**** | **A2.1**** | **B1*** | **B2*** | **B3*** | **B1.1**** | **B2.1**** | **E1*** | **E2*** | **E1.1**** | **E4**** | **F1*** | **F1.1**** |
|---|---|---|---|---|---|---|---|---|---|---|---|---|---|---|---|---|
| Anionic Surfactant | 0.7 | 0.7 | 0.7 | 0.7 | 0.7 | 0.7 | 0.7 | 0.7 | 0.7 | 0.7 | 0.7 | 0.7 | 0.7 | 0.7 | 1.4 | 1.4 |
| Non-ionic Surfactant | - | - | - | - | - | 0.5 | 0.5 | 0.5 | 0.5 | 0.5 | 0.1 | 0.1 | 0.1 | 0.1 | - | - |
| Solvent: PEG 4000 | - | - | - | - | - | - | - | - | - | - | 0.9 | 0.9 | 0.9 | 0.9 | - | - |
| Solvent: 1,2 dipropyleneglycol | 0.2 | 0.2 | 0.2 | 0.2 | 0.2 | 0.2 | 0.2 | 0.2 | 0.2 | 0.2 | 0.2 | 0.2 | 0.2 | 0.2 | 0.4 | 0.4 |
| C12-13 alkyl lactic ester (C2 mono-branched) | 0.1 | - | - | - | - | 0.1 | - | - | - | - | 0.1 | - | - | - | 0.1 | - |
| C12-13 alkyl lactic ester (50:50 linear/branched) | - | - | 0.1 | - | - | - | - | 0.1 | - | - | - | 0.1 | - | - | - | - |
| C11 ethoxylated lactic ester | - | 0.1 | - | - | - | - | 0.1 | - | - | - | - | - | - | - | - | - |
| C12-15 alkyl benzoic ester | - | - | - | 0.1 | - | - | - | - | 0.1 | - | - | - | 0.1 | - | - | 0.1 |
| C11 ethoxylated benzoic ester | - | - | - | - | 0.1 | - | - | - | - | 0.1 | - | - | - | 0.1 | - | - |
| Water | 99.0 | 99.0 | 99.0 | 99.0 | 99.0 | 98.5 | 98.5 | 98.5 | 98.5 | 98.5 | 98.0 | 98.0 | 98.0 | 98.0 | 98.1 | 98.1 |

| **RESULTS** | | | | | | | | | | | | | | | | |
|---|---|---|---|---|---|---|---|---|---|---|---|---|---|---|---|---|
| **COMPONENT** (wt% of composition) | **A1*** | **A2*** | **A3*** | **A1.1**** | **A2.1**** | **B1*** | **B2*** | **B3*** | **B1.1**** | **B2.1**** | **E1*** | **E2*** | **E1.1**** | **E4**** | **F1*** | **F1.1**** |
| cc foam@ 0 min / cc foam@ 5 min | 780/470 | 770/470 | 760/480 | 690/395 | 690/375 | 870/510 | 770/415 | 780/480 | 740/420 | 730/400 | 810/510 | 888/500 | 750/435 | 760/405 | 790/490 | 710/420 |
| **Prior art vs Invention:***** | | | | A1.1vsA1 | A2.1vsA2 | | | | B1.1vsB1 | B2.1vsB2 | | | E1.1vsE1 | E4vsE1 | | F1.1vsF1 |
| **% change@ 0 min / % change@ 5 min** | | | | -11.5 / -16.0 / | -10.4 / -20.2 | | | | -14.9 / -17.7 | -5.2 / -3.6 | | | -7.4 / -14.7 | -6.2 / -20.6 | | -10.1 / -14.3 |
| **Prior art vs Invention:***** | | | | A1.1vsA3 | | | | | B1.1vsB3 | | | | | E4vsE2 | | |
| **% change@ 0 min / % change@ 5 min** | | | | -9.2 / -17.7 | | | | | -5.1 / -12.5 | | | | | -14.4 / -19.0 | | |

| | | | | | | | | | | | | | | | | |
|---|---|---|---|---|---|---|---|---|---|---|---|---|---|---|---|---|
| * Example according to invention ** Comparative example according to prior art **** Negative % change values indicate diminished foaming behavior of the prior art compound (alkyl benzoic ester) versus the invention compound (alkyl lactic ester)* | | | | | | | | | | | | | | | | |

## Claims

**1.** A foaming composition comprising:
an alkyl lactic ester or mixture of alkyl lactic esters,
wherein the alkyl lactic ester has a molecular structure as shown in structure I: 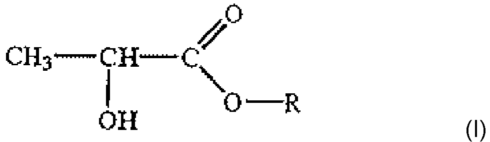
wherein
R is an alkyl group having from 12, 13 or 14 carbon atoms, preferably 12 or 13 carbon atoms, or a mixture thereof;
an anionic surfactant or mixture of anionic surfactants; and
water.

**2.** The foaming composition of claim 1, wherein the composition further comprises one or more of: an organic solvent, an organic co-solvent, a non-ionic surfactant and an amphoteric surfactant.

**3.** The foaming composition of claims 1 or 2, wherein R is a mono- or multiply branched alkyl group, more preferably internally branched at least one position from the carbon 3 position onwards to the omega - 1 carbon position.

**4.** The foaming composition of claims 1 to 3, wherein R is branched at the carbon-2 position, more preferably R is mono-branched and branched only at the carbon-2 position.

**5.** The foaming composition of claims 1 to 4, wherein the composition further comprises as anionic surfactant or mixture of anionic surfactants having a molecular structure as shown in structure II:
R₁ - O - (EO)ₘ - SO₃ - X⁺ (II)
wherein
R₁ is a linear or branched C₆ - C₃₂ alkyl group;
EO is an ethoxy group;
m is 1 to 12;
X⁺ is selected from the group comprising ammonium ions (NH₄⁺), ions of mono-, di- or tri-C₁ to C₃ alkanolamines, to include monoethanolamine, diethanolamine, triethanolamine, as well as ions of isopropanolamines, to include monoisopropanolamine, diisopropanolamine and triisopropanolamine, and the alkali metal ions Li⁺, Na⁺ or K⁺.

**6.** The foaming composition of claim 5, wherein, independent of each other,
R₁ is a linear alkyl group with 6 to 10 carbon atoms;
m is 1 to 6, more preferably m is 2 to 4; and/or
X⁺ is ethanolamine, more preferably monoethanolamine.

**7.** The foaming composition of any of the claims 2 to 6, wherein the non-ionic surfactant(s) is/are alkoxylated alcohols with a molecular structure as shown in structure III:
R₂-O-(AO)_{a+b}-H (III)
wherein
R₂ is a linear or branched alkyl group, or a mixture of linear and branched alkyl groups, having from 6 to 14 carbon atoms;
AO is an ethoxy group (EO) and / or a propoxy group (PO), wherein a assigned to AO = EO and b assigned to AO = PO may be the same or different,
a = 0 to 20, b = 0 to 20 with a + b ≥ 1,
wherein the EO and PO may be
- randomly distributed or
- one or more blocks of multiple EO bound to one or more blocks of multiple PO.

**8.** The foaming composition of claim 7, wherein independent of each other
R₂ is a linear C₈ - C₁₄ alkyl group, more preferably wherein R₂ is a linear C₈ alkyl group; and/or
AO is an ethoxy group (EO) with a = 6 to 9 and b = 0.

**9.** The foaming composition of any of the claims 2 to 8, wherein the solvent is a glycol, preferably selected from the group ethylene glycol, polyethylene glycols, 1,2 propandiol and mixtures thereof, and more preferably is 1,2 dipropyleneglycol and/or poly-ethyleneglycol.

**10.** The foaming composition of any of the claims above, wherein the amount of the water is in the range of 50.0 to 99,8 weight%, preferably 96.0 to 99.0 weight%, relative to the weight of the composition.

**11.** The foaming composition of any of the claims above, wherein the amount of the anionic surfactant is in the range of 0.1 to 5.0 weight%, preferably 0.7 to 1.4 weight%, relative to the weight of the composition.

**12.** The foaming composition of any of the claims above, wherein the amount of the alkyl lactic ester is in the range of 0.1 to 0.5 weight%, preferably 0.1 to 0.2 weight%, relative to the weight of the composition.

**13.** The foaming composition of any of claim 2 to 12, wherein the amount of the non-ionic surfactant is in the range of 0 to 5.0 weight%, preferably 0.1 to 2.0 weight%, more preferably 0.1 to 0.5 weight%, relative to the weight of the composition.

**14.** The foaming composition of any of claims 2 to 13, wherein the amount of the solvent is in the range of 0 to 5.0 weight%, preferably 0.1 to 1.5 weight%, more preferably 0.2 to 1.3 weight%, relative to the weight of the composition.

**14.** The foaming composition of any of the claims above, wherein the water is de-mineralised water or water with a salinity of above 0 to 5 weight%, more preferably a salinity of 3 to 4 weight%.

**15.** The foaming composition of any of the claims above, wherein the foaming height of the composition is increased by at least 1 to 20%, more preferably by at least 5 to 20%, most preferably by at least 10 to 20%, upon addition of the alkyl lactic esters when compared to the foaming volume of a composition without the addition of the alkyl lactic esters.

**16.** A method for enhancing and/or stabilising foam formation in an aqueous surfactant composition comprising the addition of alkyl lactic esters of any of the preceding claims to an aqueous surfactant mixture comprising at least one anionic surfactant of any of the preceding claims.

**17.** A use of an alkyl lactic ester or mixture of alkyl lactic esters as a foam-boosting agent, **characterised in that** the alkyl lactic ester has a molecular structure as shown in structure I: 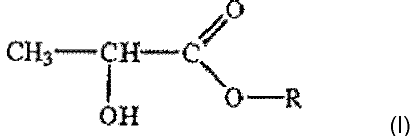 wherein
R is an alkyl group having 12, 13 or 14 carbon atoms, preferably 12 or 13 carbon atoms; or a mixture thereof; in a surfactant composition comprising an anionic surfactant or mixture of anionic surfactants; and water;
to form a composition having foam-boosted properties.

**18.** The use of claim 17, wherein the composition is the foaming composition as defined as in any of the claims 1 to 15.

**19.** The use of claim 17 or 18, wherein the composition is used
- in oil and gas recovery applications, in particular the recovery of water, gas and oil, including tertiary recovery operations such as chemicals and gas injections, as well as drilling applications or
- in gypsum board manufacturing processes, construction processes, personal care and cosmetics application.
